(19) Europäisches Patentamt
European Patent Office
Office européen des brevets

(11) **EP 3 051 679 B1**

(12) **EUROPEAN PATENT SPECIFICATION**

(45) Date of publication and mention
of the grant of the patent:
**21.08.2019 Bulletin 2019/34**

(51) Int Cl.:
***H02M 3/335*** *(2006.01)*  ***H02M 3/337*** *(2006.01)*
***H02M 1/00*** *(2006.01)*

(21) Application number: **15851631.0**

(22) Date of filing: **05.11.2015**

(86) International application number:
**PCT/CN2015/093852**

(87) International publication number:
**WO 2016/078515 (26.05.2016 Gazette 2016/21)**

(54) **RESONANT RECTIFIER APPARATUS, AND RESONANT RECTIFIER CONTROL METHOD AND APPARATUS**

RESONANTE GLEICHRICHTERVORRICHTUNG SOWIE VERFAHREN UND VORRICHTUNG ZUR STEUERUNG DER RESONANTEN GLEICHRICHTERVORRICHTUNG

APPAREIL REDRESSEUR À RÉSONANCE AINSI QUE PROCÉDÉ ET APPAREIL DE COMMANDE DE REDRESSEUR À RÉSONANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.11.2014 CN 201410676697**

(43) Date of publication of application:
**03.08.2016 Bulletin 2016/31**

(73) Proprietor: **Xiaomi Inc.**
**Beijing 100085 (CN)**

(72) Inventors:
 • **FAN, Jie**
   **Beijing 100085 (CN)**
 • **SHI, Xinming**
   **Beijing 100085 (CN)**
 • **SUN, Wei**
   **Beijing 100085 (CN)**

(74) Representative: **Robson, Aidan John**
**Reddie & Grose LLP**
**The White Chapel Building**
**10 Whitechapel High Street**
**London E1 8QS (GB)**

(56) References cited:
CN-A- 102 355 147        CN-A- 104 333 240
CN-U- 203 859 683        JP-A- 2005 198 438
JP-A- 2014 180 111       US-A1- 2007 216 388
US-A1- 2008 106 243      US-A1- 2008 144 339
US-A1- 2009 097 280      US-A1- 2010 002 471
US-A1- 2011 128 758      US-A1- 2011 267 844
US-A1- 2012 033 453      US-A1- 2014 254 203
US-B1- 7 193 866

# Description

## TECHNICAL FIELD

The present disclosure relates to the art of application circuit technique, and more particularly, to a resonant rectifying device, a control method and apparatus for resonant rectifying.

## BACKGROUND

As functions of electronic devices become more and more complex while interactive interfaces become simpler and simpler, integration levels of control chips are inevitably become higher and higher with increasing power consumption. For application circuits of chips, more appropriate circuit topological structures and logic control circuits are required to increase the efficiency.

In the related art, power of the primary side of a transformer is transferred to the output circuit of the secondary side mainly by the means of resonance. After a boosting circuit boosts the voltage to a preset voltage, a half bridge circuit constituted of two field effect transistors (FETs) controls the preset voltage to charge a capacitor. The capacitor and the transformer connected in series constitute a LC resonant circuit. Power of the resonant circuit transfers from the primary side to the secondary side of the transformer. After receiving the power, the secondary side transfers the power to a load via a rectifying diode for the load to use.

The following problems exist in the related art.

(a) Since inductance leakage exists in the transformer, the manner in which the capacitor and the transformer are connected in parallel is not a real resonant circuit. That is, LC does not operate at a resonance point. In addition, the inductance leakage of the transformer is not a constant, but can only be controlled in a certain range. Therefore, if the circuit operates according to the resonance frequency

$$\omega_{\mathrm{r}} = \frac{1}{\sqrt{LC}},$$ it operates in a capacitive region in which capacity is in predominant position. The power of the primary coil is less than the theoretical value due to the inductance leakage, which lowers the power converting efficiency.

(b) Rectifying circuit of the secondary coil is usually formed of diodes, since the diodes always have current flowing therethrough, if the diodes have relative larger internal resistance, converting efficiency may be greatly affected and power consumption may be large.

## SUMMARY

The invention is defined by the features of device claim 1. The dependent claims recite advantageous features of the invention.

Embodiments of the present disclosure provide a resonant rectifying device, a control method and apparatus for resonant rectifying.

According to a first aspect of the embodiments of the present disclosure, as set forth in claim 1, there is provided a resonant rectifying device, characterized by including a primary input module, a secondary output module and a transformer,

wherein the primary input module transfers power via the transformer to the secondary output module,

the primary input module includes: a first FET and a second FET connected in series between a voltage source and a ground; a first junction capacitor connected between a source and a drain of the first FET; a second junction capacitor connected between a source and a drain of the second FET; and a first inductor connected at both ends of the primary coil of the transformer, one end of the first inductor being connected between the first FET and the second FET via a first capacitor, and the other end of the first inductor being connected to the ground, and

the secondary output module includes: a third FET having a source connected to one end of the secondary coil of the transformer; and a fourth FET having a source connected to the other end of the secondary coil of the transformer, wherein a drain of the third FET is connected with a drain of the fourth FET, and is connected to the output terminal of the secondary output module via a second capacitor and a first resistant that are connected in parallel; the device further includes a control apparatus which includes: a first amplifier connected at the non-inverting input to a reference output voltage and at the output to a mode selector, a second amplifier connected at inverting input to the output of the mode selector and at the output to a controller, a programmable gain amplifier connected to the controller, a charge pump connected to the programmable gain amplifier, and a crystal oscillator connected to the charge pump and to the controller, the control apparatus configured to provide switching signals to each of the field effect transistors in the primary input module and the secondary output module, further configured to operate in a pulse width modulation control mode by comparing the output signal of the second amplifier with a zigzag wave in the controller, when the resonant rectifying circuit is in a full load mode as detected by the first amplifier and to operate in a frequency modulation control mode by controlling the charge pump with the programmable gain amplifier to control the magnitude of the slope of a zigzag wave generated by the crystal oscillator when the resonant rectifying circuit is in a light-loaded or idle mode as detected by the first amplifier.

Alternatively, the primary input module further includes a second inductor,

wherein the one end of the first inductor is connected between the first FET and the second FET via the first capacitor and the second inductor that are connected in series.

According to a second aspect of the embodiments of the present disclosure, there is provided a control method for resonant rectifying, characterized in controlling the above resonant rectifying device, the method including:

during a first time segment of an operating period, controlling the first FET and the second FET to turn on and controlling the third FET to turn off, such that the primary input module receives power from a power source; controlling the third FET to turn on, such that the power stored in the primary input module is transferred to the secondary output module via the transformer; and controlling the third FET to turn off before the first FET, such that the primary input module stops transferring power to the secondary output module, and the secondary output module stores the power;

during a second time segment of the operating period, controlling the first FET, the second FET, the third FET and the fourth FET to turn off, such that the second junction capacitor of the second FET discharges, the second FET is in a zero voltage transition state in a following turn-on period, and the first junction capacitor of the first FET is charged until the voltage across two ends of the first junction capacitor reaches a power source voltage;

during a third time segment of the operating period, controlling the first FET, the second FET, the third FET and the fourth FET to turn off, such that the primary input module stops transferring power to the secondary output module, and the secondary output module outputs power;

during a fourth time segment of the operating period, controlling the second FET and the fourth FET to turn on successively, such that the primary input module transfers power to the secondary output module, and the secondary output module stores power; and

during a fifth time segment of the operating period, controlling the first FET, the second FET, the third FET and the fourth FET to turn off, such that the first junction capacitor of the first FET discharges, the first FET is in a zero voltage transition state in a following turn-on period, the primary input module transfers power to the secondary output module, and the secondary output module outputs power.

Alternately, the method further includes: acquiring a turn-on time of the first FET and the second FET with the following equation:

$$T = 2\pi\sqrt{L_r C_r}\ ,$$

wherein T denotes the turn-on time of the first FET and the second FET, Lr denotes an inductance value of the second inductor in the primary input module, and Cr denotes a capacitance value of the first capacitor in the primary input module .

Alternately, the turn-on time of the first FET and the second FET is greater than a turn-on time of the third FET and the fourth FET.

Alternately, a pulse width of a secondary driving signal controlling the third FET and the fourth FET is delayed by a preset delay time with respect to a pulse width of a primary driving signal controlling the first FET and the second FET, the preset delay time including a preset turn-on delay time and a preset turn-off delay time, wherein the preset turn-on delay time controls the third FET and the fourth FET to perform a delayed turning on, and the preset turn-off delay time controls the third FET and the fourth FET to perform a delayed turning off.

According to a third aspect of the embodiments of the present disclosure, there is provided a control apparatus for resonant rectifying, characterized in controlling the above resonant rectifying device, the apparatus includes:

a first control module configured to perform the following steps,

during a first time segment of an operating period, controlling the first FET and the second FET to turn on and controlling the third FET to turn off, such that the primary input module receives power from a power source; controlling the third FET to turn on, such that the power stored in the primary input module is transferred to the secondary output module via the transformer; and controlling the third FET to turn off before the first FET, such that the primary input module stops transferring power to the secondary output module, and the secondary output module stores the power;

during a second time segment of the operating period, controlling the first FET, the second FET, the third FET and the fourth FET to turn off, such that the second junction capacitor of the second FET discharges, the second FET is in a zero voltage transition state in a following turn-on period, and the first junction capacitor of the first FET is charged until the voltage across two ends of the first junction capacitor reaches a power source voltage;

during a third time segment of the operating period, controlling the first FET, the second FET, the third FET and the fourth FET to turn off, such that the primary input module stops transferring power to the secondary output module, and the secondary output module outputs power;

during a fourth time segment of the operating period, controlling the second FET and the fourth FET to turn on successively, such that the primary input module transfers power to the secondary output module, and the secondary output module stores power; and

during a fifth time segment of the operating period, controlling the first FET, the second FET, the third FET and the fourth FET to turn off, such that the first junction capacitor of the first FET discharges, the first FET is in a zero voltage transition state in a following turn-on period, the primary input module transfers power to the secondary output module, and the secondary output module outputs power.

Alternately, the apparatus further includes: an acquiring module configured to acquire a turn-on time of the first FET and the second FET with the following equation:

$$T = 2\pi\sqrt{L_r C_r}\ ,$$

wherein T denotes the turn-on time of the first FET and the second FET, Lr denotes an inductance value of the second inductor in the primary input module, and Cr denotes a capacitance value of the first capacitor in the primary input module .

Alternately, the apparatus further includes: a second control module, configured to perform a control such that a pulse width of a secondary driving signal controlling the third FET and the fourth FET is delayed by a preset delay time with respect to a pulse width of a primary driving signal controlling the first FET and the second FET, the preset delay time including a preset turn-on delay time and a preset turn-off delay time, wherein the preset turn-on delay time controls the third FET and the fourth FET to perform a delayed turning on, and the preset turn-off delay time controls the third FET and the fourth FET to perform a delayed turning off.

According to a fourth aspect of the embodiment of the present disclosure, there is provided a computer program which, when being executed on a processor of an apparatus, performs any one of the above methods.

The technical solutions of the embodiments of the present disclosure may provide the following advantages: by replacing the rectifying diodes in the secondary side of the resonant rectifying device by a third MOS transistor and fourth MOS transistor, circuit loop of the secondary side may be effectively disconnected, thereby decreasing or eliminating the influence on the load due to the coupling. In addition, in the circuit of the present disclosure, the MOS transistors of the primary side and the secondary side are turned on in order, i.e., after the MOS transistors of the primary side are turned on firstly, the MOS transistors of the secondary side are turned on after delaying a certain time; while after MOS transistors of the secondary side are turned off, the MOS transistors of the primary side are turned off after delaying a certain time, thereby effectively avoid the influence on the load due to magnetic flux leakage. As such, by replacing the rectifying diodes in the secondary side with MOS transistors, synchronous rectifying is realized, thereby increasing converting efficiency, increasing the operating stability of the load apparatus, protecting the load apparatus effectively and preventing damages to the load apparatus. In addition, zero voltage transition technology may be utilized and thus lowering power consumption on the MOS transistors.

BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

Fig. 1 is a circuit diagram of a resonant rectifying device illustrated according to an exemplary embodiment;
Fig. 2 is a circuit diagram of a resonant rectifying device illustrated according to another exemplary embodiment;
Fig. 3 is a circuit operation timing diagram of a resonant rectifying device illustrated according to an exemplary embodiment;
Fig. 4 is a schematic diagram of a current flow direction of a resonant rectifying device illustrated according to an exemplary embodiment;
Fig. 5 is a schematic diagram of a current flow direction of a resonant rectifying device illustrated according to an exemplary embodiment;
Fig. 6 is a schematic diagram of a current flow direction of a resonant rectifying device illustrated according to an exemplary embodiment;
Fig. 7 is a schematic diagram of a current flow direction of a resonant rectifying device illustrated according to an exemplary embodiment;
Fig. 8 is a schematic diagram of a current flow direction of a resonant rectifying device illustrated according to an exemplary embodiment;
Fig. 9 is a schematic diagram of a primary driving signal and a secondary driving signal of a resonant rectifying device illustrated according to an exemplary embodiment;
Fig. 10 is a block diagram of a control apparatus for resonant rectifying illustrated according to an exemplary embodiment; and
Fig. 11 is a circuit structure diagram of a control apparatus for resonant rectifying illustrated according to an exemplary embodiment.

DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

In the related art, diodes are usually used in the secondary side of a resonant circuit. Diodes are always turned on, which means that the secondary side is always a complete discharge loop. When current is unnecessary in the secondary side, a small current may be generated in the secondary side due to the coupling of the primary side. Loss may exist due to the current, and the current may further cause that the coupling current could not reach a power level required by the load. Therefore, operation of the load is unstable. In addition, magnetic flux leakage may exist in the transformer, and the magnetic flux leakage may greatly affect the magnetic field space. Due to the property of always turning on of the diodes, current spike generated due to the magnetic flux leakage may be transferred to the secondary side, current spike may be correspondingly generated in the secondary side, thereby may damage the load apparatus.

In the embodiments of the present disclosure, diodes in the secondary side of the resonant rectifying circuit may be replaced with filed effect transistors (MOS transistors), which may solve the problem of magnetic flux leakage and coupling current lost. In addition, a problem of inductance leakage may be solved by adding an inductor at the primary side of the resonant rectifying circuit.

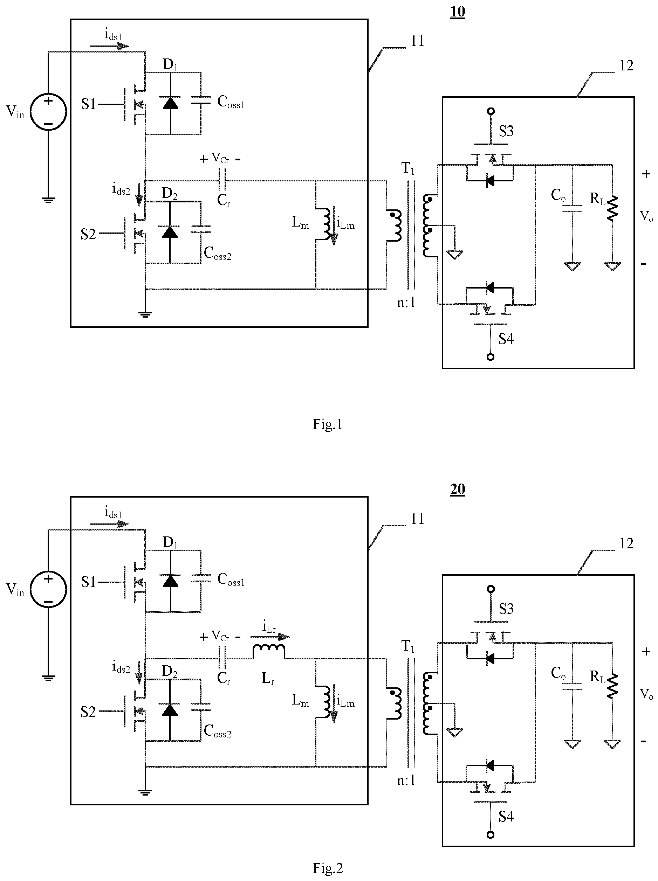

Fig. 1 is a circuit diagram of a resonant rectifying device illustrated according to an exemplary embodiment. As illustrated in Fig. 1, the device includes a primary input module 11, a transformer T1 and a secondary output module 12.

Herein, the primary input module 11 transfers power to the secondary output module 12 via the transformer T1.

The primary input module 11 includes a first MOS transistor S1 and a second MOS transistor S2 connected in series between a voltage source $V_{in}$ and a ground; a first junction capacitor $C_{oss1}$ connected between a source and a drain of the first MOS transistor S1; a second junction capacitor $C_{oss2}$ connected between a source and a drain of the second MOS transistor S2; and a first inductor $L_m$ connected to both ends of the primary coil of the transformer T1, wherein one end of the first inductor $L_m$ is connected between the first MOS transistor S1 and the second MOS transistor S2 via a first capacitor $C_r$, and the other end of the first inductor $L_m$ is connected to the ground.

The secondary output module 12 includes: a third MOS transistor S3 having a source connected to one end of the secondary coil of the transformer T1; and a fourth MOS transistor S4 having a source connected to the other end of the secondary coil of the transformer T1, wherein a drain of the third MOS transistor S3 is connected with a drain of the fourth MOS transistor S4, and is connected to the output terminal of the secondary output module 12 via a second capacitor $C_o$ and a first resistant $R_L$ that are connected in parallel.

In the present embodiment, by replacing the rectifying diodes in the secondary side of the resonant rectifying device by a third MOS transistor and fourth MOS transistor, circuit loop of the secondary side may be effectively disconnected, thereby decreasing or eliminating the influence on the load due to the coupling. In addition, in the circuit of the present embodiment, the MOS transistors of the primary side and the secondary side are turned on in an order, i.e., after the MOS transistors of the primary side are turned on firstly, the MOS transistors of the secondary side are turned on after delaying a certain time; and after the MOS transistors of the secondary side are turned off, the MOS transistors of the primary side are turned off after delaying a certain time, thereby the influence on the load due to magnetic flux leakage may be effectively avoided. As such, by replacing the rectifying diodes in the secondary side with MOS transistors, synchronous rectifying is realized, thereby increasing converting efficiency, increasing the operating stability of the load apparatus, protecting the load apparatus effectively and preventing damages to the load apparatus. In addition, zero voltage transition technology may be utilized and thus lowering power consumption on the MOS transistors.

Fig. 2 is a circuit diagram of a resonant rectifying device illustrated according to another exemplary embodiment. As illustrated in Fig. 2, alternately, the primary input module 11 may further include a second inductor $L_r$. One end of the first inductor $L_m$ is connected between the first MOS transistor S1 and the second MOS transistor S2 via the first capacitor $C_r$ and the second inductor $L_r$ that are connected in series.

In the alternative embodiment, an inductor is added in the primary side, thereby compensating the decrease of L (inductance) value due to inductance leakage. Therefore, the actual resonant frequency may be equal to or greater than a theoretic resonant frequency, such that the resonant point may fall within an inductive region, so as to solve the problem of inductance leakage and improve power converting efficiency.

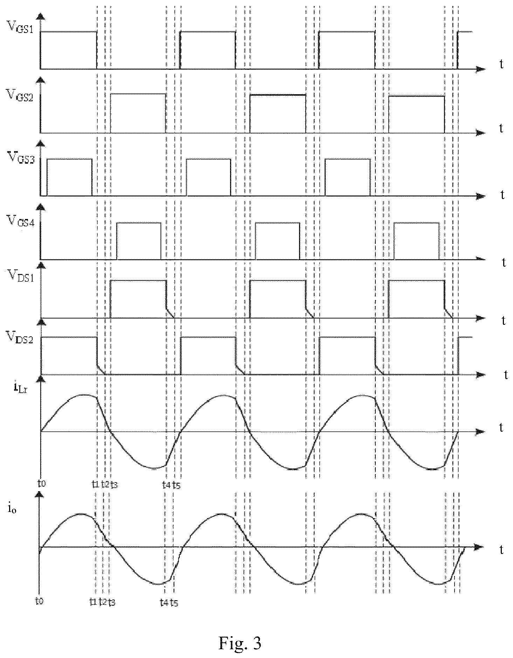

Fig. 3 is a circuit operation timing diagram of a resonant rectifying device illustrated according to an exemplary embodiment. As illustrated in Fig. 3, one operation period of the resonant rectifying device is divided into five time segments. The present disclosure further provides a resonant rectifying control method for controlling the resonant rectifying device to operate according to the circuit operation timing illustrated in Fig. 3. One operation period of the resonant rectifying device is divided into five time segments, and hereinafter, detailed control process in each time segments is described respectively.

(I) the first time segment

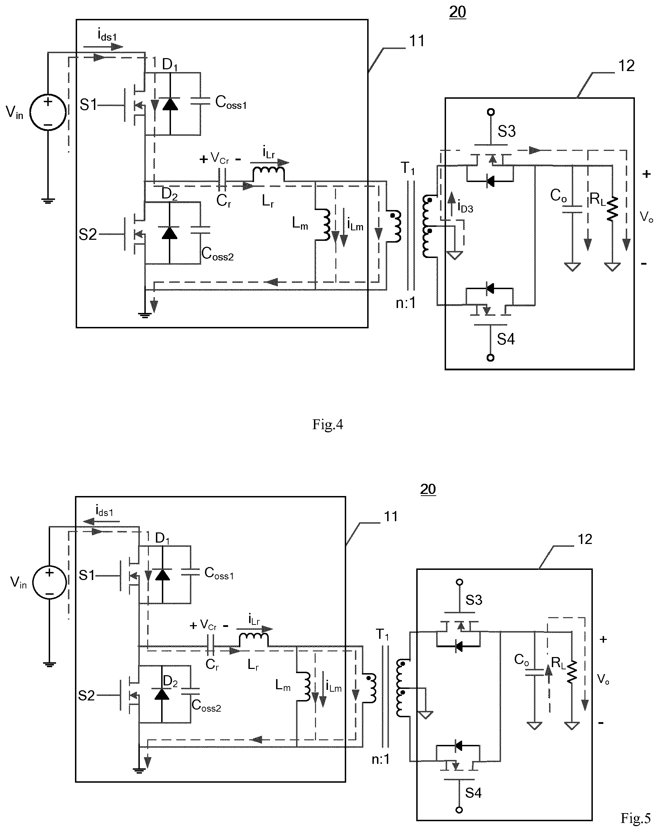

Fig. 4 is a schematic diagram of a current flow direction of a resonant rectifying device illustrated according to an exemplary embodiment. As illustrated in Fig. 4, it is controlled that the first MOS transistor S1 and the second MOS transistor S2 are turned on and the third MOS transistor S3 is turned off, such that the primary input module 11 receives power from a power source $V_{in}$. It is controlled that the third MOS transistor S3 is turned on, such that the power stored in the primary input module 11 is transferred to the secondary output module 12 via the transformer T1; and it is controlled that the third MOS transistor S3 is turned off before the first MOS transistor S1, such that the primary input module 11 stops transferring power to the secondary output module 12, and the secondary output module 12 stores the power.

(II) the second time segment

Fig. 5 is a schematic diagram of a current flow direction of a resonant rectifying device illustrated according to an exemplary embodiment. As illustrated in Fig. 5, it is controlled that the first MOS transistor S1, the second MOS transistor S2, the third MOS transistor S3 and the fourth MOS transistor S4 are turned off, such that the second junction capacitor $C_{oss2}$ of the second MOS transistor S2 discharges, the second MOS transistor S2 is in a zero voltage transition state in a following turn-on period, meanwhile, current in the second inductor $L_r$ continues and the first junction capacitor $C_{oss1}$ of the first MOS transistor S1 is charged until the voltage across two ends of the first junction capacitor $C_{oss1}$ reaches the power source voltage $V_{in}$ while the voltage across two ends of the second junction capacitor $C_{oss2}$ discharges from $V_{in}$ to 0 (zero).

Junction capacitance $C_{oss}$ of a MOS transistor is a function of VDS, and it can be known as:

$$C_{oss} = C_{stary} + \frac{8}{3}C'_{oss}\sqrt{\frac{V'_{oss}}{V_{DS}}},$$

wherein $C'_{OSS}$ denotes the junction capatance of the MOS transistor when $V_{DS} = V'_{oss}$, which may be looked up in the product guidline of a MOS transistor manufacturer.

During the second time segment, the entire circuit is in a ZVS (Zero Voltage Switch) state.

(III) The third time segment

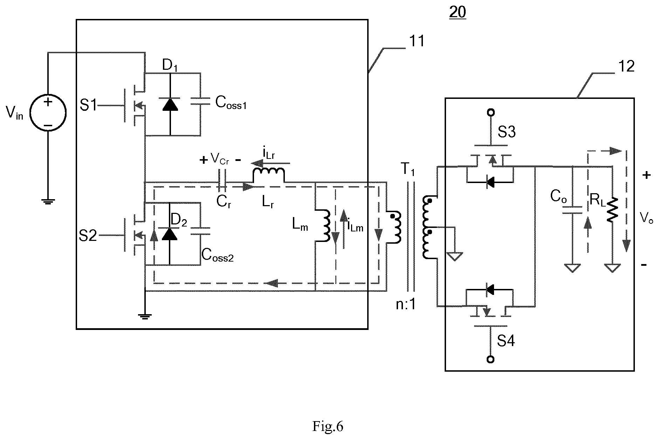

Fig. 6 is a schematic diagram of a current flow direction of a resonant rectifying device illustrated according to an exemplary embodiment. As illustrated in Fig. 6, it is controlled that the first MOS transistor S1, the second MOS transistor S2, the third MOS transistor S3 and the fourth MOS transistor S4 are turned off, such that the primary input module 11 stops transferring power to the secondary output module 12, and the secondary output module 12 outputs power.

(IV) The fourth time segment

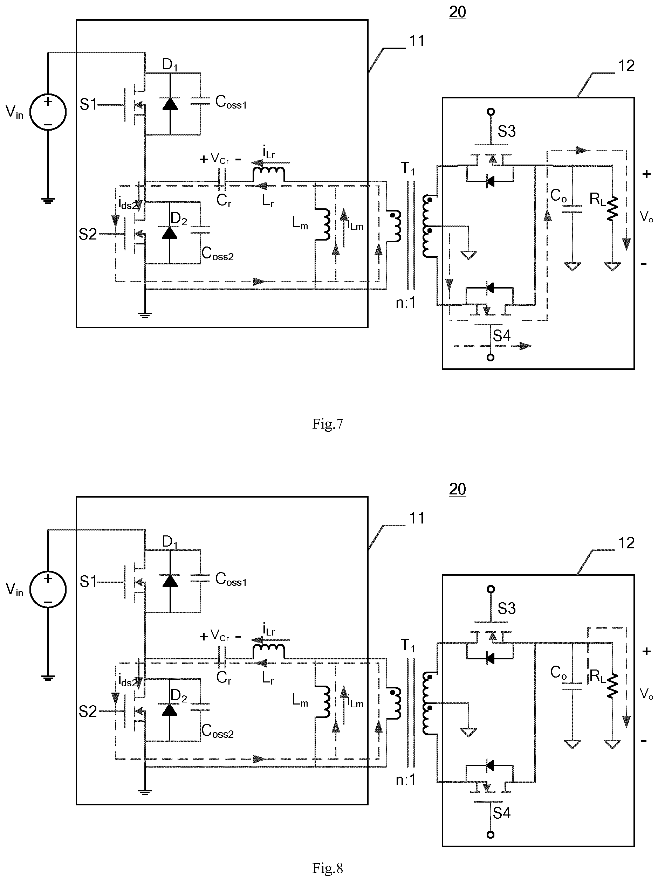

Fig. 7 is a schematic diagram of a current flow direction of a resonant rectifying device illustrated according to an exemplary embodiment. As illustrated in Fig. 7, it is controlled that the second MOS transistor S2 and the fourth MOS transistor S4 are turned on successively, such that the primary input module 11 transfers power to the secondary output module 12, and the secondary output module 12 stores power.

As the second MOS transistor S2 is turned on and forms a loop, power starts to be discharged, and the voltage across the first capacitor $C_r$ is

$$\frac{1}{2}V_{in} + i_{Lr} \cdot \frac{1}{2\pi f C_r}.$$

When the fourth MOS transistor S4 is turned on, power is transferred from the primary input module 11 to the secondary output module 12 via the fourth MOS transistor S4, and meanwhile second capacitor $C_o$ is charged.

(V) The fifth time segment

Fig. 8 is a schematic diagram of a current flow direction of a resonant rectifying device illustrated according to an exemplary embodiment. As illustrated in Fig. 8, it is controlled that the first MOS transistor S1, the second MOS transistor S2, the third MOS transistor S3 and the fourth MOS transistor S4 are turned off, such that the first junction capacitor $C_{oss1}$ of the first MOS transistor S1 discharges, the first MOS transistor S1 is in a zero voltage transition state in a following turn-on period. Meanwhile, due to properties of the inductor, in the primary input module 11, current will not disappear instantaneously and continuity of the resonant current may be ensured. The primary input module 11 transfers power to the secondary output module 12, and the secondary output module 12 outputs power.

In the present embodiment, the MOS transistors of the resonant rectifying device are controlled to be turned on alternatively by the control apparatus, and influence on the load due to the magnetic flux leakage may be effectively prevented. By replacing the rectifying diodes in the secondary side with MOS transistors, synchronous rectifying is realized, thereby increasing converting efficiency, increasing the operating stability of the load apparatus, protecting the load apparatus effectively and preventing damages to the load apparatus. In addition, zero voltage transition technology may be utilized and thus lowering power consumption on the MOS transistors. In addition, an inductor is added in the primary side, thereby compensating the decrease of L value due to inductance leakage. Therefore, the actual resonant frequency may be equal to or greater than a theoretic resonant frequency, such that the resonant point may fall within an inductive region, so as to solve the problem of inductance leakage and improve power converting efficiency.

Alternately, the method further includes:
acquiring a turn-on time of the first field effect transistor (MOS transistor) and the second MOS transistor with the following equation:

$$ T = 2\pi\sqrt{L_r C_r} \text{ ,} $$

wherein T denotes the turn-on time of the first MOS transistor and the second MOS transistor, $L_r$ denotes an inductance value of the second inductor in the primary input module, and $C_r$ denotes a capacitance value of the first capacitor in the primary input module

Alternately, the turn-on time of the first MOS transistor and the second MOS transistor is greater than a turn-on time of the third MOS transistor and the fourth MOS transistor.

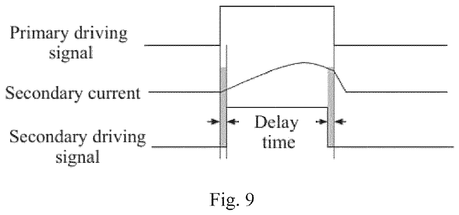

Fig. 9 is a schematic diagram of a primary driving signal and a secondary driving signal of a resonant rectifying device illustrated according to an exemplary embodiment. As illustrated in Fig. 9, alternately, a pulse width of a secondary driving signal controlling the third MOS transistor and the fourth MOS transistor is delayed by a preset delay time with respect to a pulse width of a primary driving signal controlling the first MOS transistor and the second MOS transistor, wherein the preset delay time includes a preset turn-on delay time and a preset turn-off delay time, and wherein the preset turn-on delay time controls the third MOS transistor and the fourth MOS transistor to perform a delayed turning on, and the preset turn-off delay time controls the third MOS transistor and the fourth MOS transistor to perform a delayed turning off.

For example, the preset turn-on delay time and the preset turn-off delay time are set as 10% of the pulse width of the primary driving signal, respectively.

In an alternative implementation, the turn-on delay is in consideration of the factors of switch delay, duty ratio and the like of the MOS transistors of the primary half bridge. That is, when the current value is not positive, the secondary driving signal cannot be at a high level; otherwise, reverse current may flow reversely to the primary side. The turn-off delay is in consideration of the switch delay of the secondary synchronous rectification MOS transistor. When the current is still decreasing, the secondary driving signal shall turn to a low level in advance; otherwise, reverse current may flow reversely.

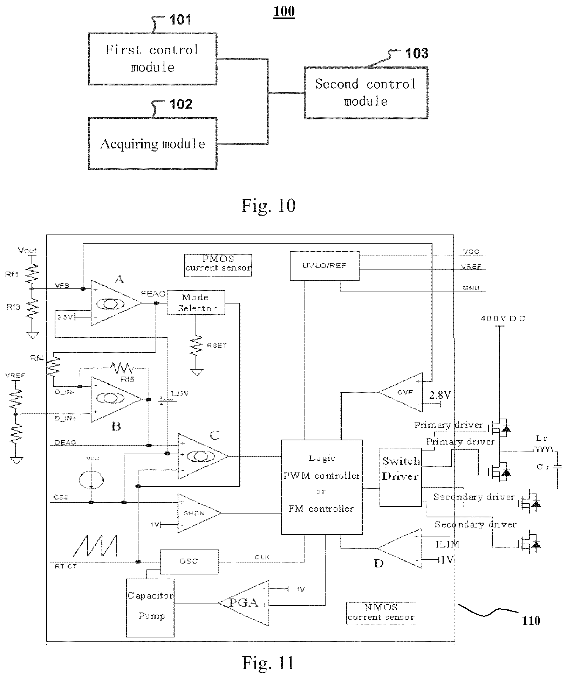

Fig. 10 is a block diagram of a control apparatus for resonant rectifying illustrated according to an exemplary embodiment. As illustrated in Fig. 10, the apparatus includes a first control module 101.

The first control module is configured to perform the following steps:

during a first time segment of an operating period, controlling the first MOS transistor and the second MOS transistor to turn on and controlling the third MOS transistor to turn off, such that the primary input module receives power from a power source; controlling the third MOS transistor to turn on, such that the power stored in the primary input module is transferred to the secondary output module via the transformer; and controlling the third MOS transistor to turn off before the first MOS transistor, such that the primary input module stops transferring power to the secondary output module, and the secondary output module stores the power;

during a second time segment of the operating period, controlling the first MOS transistor, the second MOS transistor, the third MOS transistor and the fourth MOS transistor to turn off, such that the second junction capacitor of the second MOS transistor discharges, the second MOS transistor is in a zero voltage transition state in a following turn-on period, and the first junction capacitor of the first MOS transistor is charged until the voltage across two ends of the first junction capacitor reaches a power source voltage;

during a third time segment of the operating period, controlling the first MOS transistor, the second MOS transistor, the third MOS transistor and the fourth MOS transistor to turn off, such that the primary input module stops transferring power to the secondary output module, and the secondary output module outputs power;

during a fourth time segment of the operating period, controlling the second MOS transistor and the fourth MOS transistor to turn on successively, such that the primary input module transfers power to the secondary output module, and the secondary output module stores power; and

during a fifth time segment of the operating period, controlling the first MOS transistor, the second MOS transistor, the third MOS transistor and the fourth MOS transistor to turn off, such that the first junction capacitor of the first MOS transistor discharges, the first MOS transistor is in a zero voltage transition state in a following turn-on period, the primary input module transfers power to the secondary output module, and the secondary output module outputs power.

As illustrated in Fig. 10, alternately, the apparatus further includes:

an acquiring module 102 configured to acquire a turn-on time of the first MOS transistor and the second MOS transistor with the following equation:

$$T = 2\pi\sqrt{L_r C_r} \,,$$

wherein T denotes the turn-on time of the first MOS transistor and the second MOS transistor, $L_r$ denotes an inductance value of the second inductor in the primary input module, and $C_r$ denotes a capacitance value of the first capacitor in the primary input module

As illustrated in Fig. 10, alternately, the apparatus further includes:

a second control module 103, configured to control a pulse width of a secondary driving signal controlling the third MOS transistor and the fourth MOS transistor to be delayed by a preset delay time with respect to a pulse width of a primary driving signal controlling the first MOS transistor and the second MOS transistor, wherein the preset delay time includes a preset turn-on delay time and a preset turn-off delay time, and wherein the preset turn-on delay time controls the third MOS transistor and the fourth MOS transistor to perform a delayed turning on, and the preset turn-off delay time controls the third MOS transistor and the fourth MOS transistor to perform a delayed turning off.

With respect to the apparatus of the above embodiment, detailed operations performed in each of the modules have been described in detail in the embodiments regarding the corresponding method, and detailed description thereof are omitted herein.

The above function of the control apparatus for resonant rectifying may also be implemented by an actual circuit as follow.

Fig. 11 is a circuit structure diagram of a control apparatus for resonant rectifying illustrated according to an exemplary embodiment. As illustrated in Fig. 11, when the resonant rectifying circuit is in a light-loaded or idle mode, the control circuit has to adopt frequency conversion to maintain a high efficiency. Therefore, an FM (Frequency Modulation) control mode is adopted herein. When it is in a light-loaded or idle mode, output voltage Vout of the control circuit is lowered. Through the voltage division networks Rf1 and Rf2, voltage of the positive input terminal VFB of the amplifier A may also be lowered. At this time, output terminal FEAO of the amplifier A is at a low level which is lower than an internal reference voltage of the mode selection circuit. The mode selection circuit outputs a high level to the reverse input terminal of the amplifier C. At this time, the output signal of the amplifier C passes through a logic control circuit, and the logic control circuit selects the FM control mode. Substantially, the logic control circuit changes a charge/discharge time constant of a charge pump by controlling a PGA (Programmable Gain Amplifier). At this time, the external CT/RT (Capacitance/Resistance) is disabled, and the CT/RT only determines the lowest resonant frequency. Charge and discharge of the charge pump is controlled by the PGA, so as to control the magnitude of the slope of the zigzag wave generated by the crystal oscillator (provided that power storage of each period is identical). The zigzag wave is compared by the internal comparator so as to change the frequency of the control pulse. The four output sets of driving signal drive MOS transistors of the switch half bridges and synchronous rectification MOS transistors of the secondary side, respectively, thereby realizing the FM control.

When the load of the resonant rectifying circuit is in a full-load, the control circuit does not need frequency conversion and is in a resonant frequency state, i.e. the PWM (Pulse Width Modulation) control mode. The voltage of the output voltage Vout of the control circuit may be raised, and the voltage of the positive input terminal (VFB terminal) of the amplifier A, obtained through the voltage division networks Rf1 and Rf2, may also be raised. At this time, the output terminal FEAO of the amplifier A is at a high level. Next, the output level of the mode selection circuit is connected with the reverse input terminal of the amplifier C, and the output control signal of the amplifier C selects the PWM control mode in the logic circuit, and is compared with the zigzag wave in the chip, and outputs four sets of driving signal for driving MOS transistors of the switch half bridges and synchronous rectification MOS transistors of the secondary side, respectively, thereby realizing the PWM control. When the output current reaches a set maximum threshold current, the voltage value sampled by the detection terminal ILIM is compared in the amplifier D. The amplifier D controls a selection switch inside the logic circuit, i.e., the SD terminal of the control circuit. The SD terminal is directly connected with ground, thereby controlling the operation state of the circuit (stopping operation or continuing operation).

Further variations and modifications are possible within the scope of the appended claims.

**Claims**

1.  A resonant rectifying device comprising a primary input module (11), a secondary output module (12) and a transformer (T1),
    wherein the primary input module (11) transfers power via the transformer (T1) to the secondary output module (12),
    the primary input module (11) comprises: a first field effect transistor (FET) (S1) and a second FET (S2) connected in series between a voltage source ($V_{in}$) and a ground; a first junction capacitor ($C_{oss1}$) connected between a source and a drain of the first FET (S1); a second junction capacitor ($C_{oss2}$) connected between a source and a drain of the second FET (S2); and a first inductor ($L_m$) connected at both ends of a primary coil of the transformer (T1), one end of the first inductor ($L_m$) being connected between the first FET (S1) and the second FET (S2) via a first capacitor ($C_r$), and the other end of the first inductor ($L_m$) being connected to the ground, and

the secondary output module (12) comprises: a third FET (S3) having a source connected to one end of a secondary coil of the transformer (T1); and a fourth FET (S4) having a source connected to the other end of the secondary coil of the transformer (T1), wherein a drain of the third FET (S3) is connected with a drain of the fourth FET(S4), and is connected to an output terminal of the secondary output module (12) via a second capacitor ($C_o$) and a first resistant ($R_L$) that are connected in parallel;

**characterised by** a control apparatus which comprises: a first amplifier (A) connected at a non-inverting input to a reference output voltage (VFB) and at the output (FEAO) to a mode selector, a second amplifier (C) connected at an inverting input to the output of the mode selector and at the output to a controller, a programmable gain amplifier (PGA) connected to the controller, a charge pump connected to the programmable gain amplifier (PGA), and a crystal oscillator (OSC) connected to the charge pump and to the controller, the control apparatus configured to provide switching signals to each of the field effect transistors in the primary input module and the secondary output module, further configured to operate in a pulse width modulation control mode (PWM) by comparing the output signal of the second amplifier (C) with a zigzag wave in the controller, when the resonant rectifying circuit is in a full load mode as detected by the first amplifier (A) and to operate in a frequency modulation control mode (FM) by controlling the charge pump with the programmable gain amplifier (PGA) to control the magnitude of the slope of a zigzag wave generated by the crystal oscillator (OSC) when the resonant rectifying circuit is in a light-loaded or idle mode as detected by the first amplifier (A).

2. The device according to claim 1, **characterized in that**: the primary input module (11) further comprising a second inductor ($L_r$),
   wherein the one end of the first inductor ($L_m$) is connected between the first FET (S1) and the second FET (S2) via the first capacitor ($C_r$) and the second inductor ($L_r$) that are connected in series.

3. A resonant rectifying circuit according to claim 1 or 2, **characterized in that** the control apparatus is configured to:

   during a first time segment of an operating period, control the first FET (S1) and the second FET (S2) to turn on and control the third FET (S3) to turn off, such that the primary input module (11) receives power from a power source; control the third FET (S3) to turn on, such that the power stored in the primary input module (11) is transferred to the secondary output module (12) via the transformer (T1); and control the third FET (S3) to turn off before the first FET (S1), such that the primary input module (11) stops transferring power to the secondary output module (12), and the secondary output module (12) stores the power;

during a second time segment of the operating period, control the first FET (S1), the second FET (S2), the third FET (S3) and the fourth FET (S4) to turn off, such that the second junction capacitor ($C_{oss2}$) of the second FET (S2) discharges, the second FET (S2) is in a zero voltage transition state in a following turn-on period, and the first junction capacitor ($C_{oss1}$) of the first FET (S1) is charged until the voltage across two ends of the first junction capacitor ($C_{oss1}$) reaches a power source voltage;

during a third time segment of the operating period, control the first FET (S1), the second FET (S2), the third FET (S3) and the fourth FET (S4) to turn off, such that the primary input module (11) stops transferring power to the secondary output module (12), and the secondary output module (12) outputs power;

during a fourth time segment of the operating period, control the second FET (S2) and the fourth FET (S4) to turn on successively, such that the primary input module (11) transfers power to the secondary output module (S2), and the secondary output module (S2) stores power; and

during a fifth time segment of the operating period, control the first FET (S1), the second FET (S2), the third FET (S3) and the fourth FET (S4) to turn off, such that the first junction capacitor ($C_{oss1}$) of the first FET (S1) discharges, the first FET (S1) is in a zero voltage transition state in a following turn-on period, the primary input module (11) transfers power to the secondary output module (12), and the secondary output module (12) outputs power.

4. The resonant rectifying circuit according to claim 3, **characterized in that** the control apparatus is configured to:
   acquire a turn-on time of the first FET (S1) and the second FET (S2) with the following equation:

$$T = 2\pi\sqrt{L_r C_r}\ ,$$

wherein T denotes the turn-on time of the first FET (S1) and the second FET (S2), $L_r$ denotes an inductance value of the second inductor ($L_r$) in the primary input module (11), and $C_r$ denotes a capacitance value of the first capacitor ($C_r$) in the primary input module (11).

5. The resonant rectirying circuit according to claim 4, **characterized in that** the turn-on time of the first FET (S1) and the second FET (S2) is greater than a turn-on time of the third FET (S3) and the fourth FET (S4).

6. The resonant rectifying circuit according to claim 3, **characterized in that**:
a pulse width of a secondary driving signal controlling the third FET (S3) and the fourth FET (S4) is delayed by a preset delay time with respect to a pulse width of a primary driving signal controlling the first FET (S1) and the second FET (S2), the preset delay time comprising a preset turn-on delay time and a preset turn-off delay time, wherein the preset turn-on delay time controls the third FET (S3) and the fourth FET (S4) to perform a delayed turning on, and the preset turn-off delay time controls the third FET (S3) and the fourth FET (S4) to perform a delayed turning off.

7. A resonant rectifying circuit according to claim 1 or 2, **characterized in that** the control apparatus comprises:

a first control module (101) configured to perform the following steps,
during a first time segment of an operating period, controlling the first FET (S1) and the second FET (S2) to turn on and controlling the third FET (S3) to turn off, such that the primary input module (11) receives power from a power source; controlling the third FET (S3) to turn on, such that the power stored in the primary input module (11) is transferred to the secondary output module (12) via the transformer (T1); and controlling the third FET (S3) to turn off before the first FET (S1), such that the primary input module (11) stops transferring power to the secondary output module (12), and the secondary output module (12) stores the power;
during a second time segment of the operating period, controlling the first FET (S1), the second FET (S2), the third FET (S3) and the fourth FET (S4) to turn off, such that the second junction capacitor ($C_{oss2}$) of the second FET (S2) discharges, the second FET (S2) is in a zero voltage transition state in a following turn-on period, and the first junction capacitor ($C_{oss1}$) of the first FET (S1) is charged until the voltage across two ends of the first junction capacitor ($C_{oss1}$) reaches a power source voltage;
during a third time segment of the operating period, controlling the first FET (S1), the second FET (S2), the third FET (S3) and the fourth FET (S4) to turn off, such that the primary input module (11) stops transferring power to the secondary output module (12), and the secondary output module (12) outputs power;
during a fourth time segment of the operating period, controlling the second FET (S2) and the fourth FET (S4) to turn on successively, such that the primary input module (11) transfers power to the secondary output module (12), and the secondary output module (12) stores power; and
during a fifth time segment of the operating period, controlling the first FET (S1), the second FET (S2), the third FET (S3) and the fourth FET (S4) to turn off, such that the first junction capacitor ($C_{oss1}$) of the first FET discharges, the first FET (S1) is in a zero voltage transition state in a following turn-on period, the primary input module (11) transfers power to the secondary output module (12), and the secondary output module (12) outputs power.

8. The apparatus according to claim 7, **characterized in** further comprising:
an acquiring module (102) configured to acquire a turn-on time of the first FET (S1) and the second FET (S2) with the following equation:

$$T = 2\pi\sqrt{L_r C_r}\,,$$

wherein T denotes the turn-on time of the first FET (S1) and the second FET (S2), $L_r$ denotes an inductance value of the second inductor ($L_r$) in the primary input module (11), and $C_r$ denotes a capacitance value of the first capacitor ($C_r$) in the primary input module (11).

9. The apparatus according to claim 7, **characterized in** further comprising:
a second control module (103), configured to perform a control such that a pulse width of a secondary driving signal controlling the third FET (S3) and the fourth FET (S4) is delayed by a preset delay time with respect to a pulse width of a primary driving signal controlling the first FET (S1) and the second FET (S2), the preset delay time comprising a preset turn-on delay time and a preset turn-off delay time, wherein the preset turn-on delay time controls the third FET (S3) and the fourth FET (S4) to perform a delayed turning on, and the preset turn-off delay time controls the third FET (S3) and the fourth FET (S4) to perform a delayed turning off.

**Patentansprüche**

1. Resonante Gleichrichtervorrichtung, die ein primäres Eingangsmodul (11), ein sekundäres Ausgangsmodul (12) und einen Transformator (T1) umfasst, wobei das primäre Eingangsmodul (11) Strom über den Transformator (T1) auf das sekundäre Ausgangsmodul (12) überträgt,

   wobei das primäre Eingangsmodul (11) Folgendes umfasst: einen ersten Feldeffekttransistor (FET) (S1) und einen zweiten FET (S2), in Serie zwischen einer Spannungsquelle ($V_{in}$) und Masse geschaltet; einen ersten Sperrschichtkondensator ($C_{oss1}$), der zwischen einer Source und einem Drain des ersten FET (S1) geschaltet ist; einen zweiten Sperrschichtkondensator ($C_{oss2}$), der zwischen einer Source und einem Drain des zweiten FET (S2) geschaltet ist; und einen ersten Induktor ($L_m$), der mit beiden Enden einer Primärspule des Transformators (T1) verbunden ist, wobei ein Ende des ersten Induktors ($L_m$) zwischen dem ersten FET (S1) und dem zweiten FET (S2) über einen ersten Kondensator ($C_r$) und das andere Ende des ersten Induktors ($L_m$) auf Masse geschaltet ist, und

   wobei das sekundäre Ausgangsmodul (12) Folgendes umfasst: einen dritten FET (S3) mit einer Source, die mit einem Ende einer Sekundärspule des Transformators (T1) verbunden ist; und einen vierten FET (S4) mit einer Source, die mit dem anderen Ende der Sekundärspule des Transformators (T1) verbunden ist, wobei ein Drain des dritten FET (S3) mit einem Drain des vierten FET (S4) und mit einem Ausgangsanschluss des sekundären Ausgangsmoduls (12) über einen zweiten Kondensator ($C_o$) und einen ersten Widerstand ($R_L$) verbunden ist, die parallelgeschaltet sind;

   **gekennzeichnet durch** eine Steuervorrichtung, die Folgendes umfasst: einen ersten Verstärker (A), der an einem nicht invertierenden Eingang mit einer Referenzausgangsspannung (VFB) und am Ausgang (FEAO) mit einem Modusselektor verbunden ist, einen zweiten Verstärker (C), der an einem invertierenden Eingang mit dem Ausgang des Modusselektors und am Ausgang mit einer Steuerung verbunden ist, einen programmierbaren Verstärker (PGA), der mit der Steuerung verbunden ist, eine mit dem programmierbaren Verstärker (PGA) verbundene Ladungspumpe und einen Kristalloszillator (OSC), der mit der Ladungspumpe und der Steuerung verbunden ist, wobei die Steuervorrichtung zum Anlegen von Schaltsignalen an jeden der Feldeffekttransistoren im primären Eingangsmodul und im sekundären Ausgangsmodul konfiguriert ist, ferner konfiguriert zum Arbeiten in einem Pulsbreitenmodulations-Steuermodus (PWM) durch Vergleichen des Ausgangssignals des zweiten Verstärkers mit einer Zickzack-Welle in der Steuerung, wenn die resonante Gleichrichtungsschaltung in einem vom ersten Verstärker (A) erkannten Volllastmodus ist, und zum Arbeiten in einem Frequenzmodulations-Steuermodus (FM) durch Steuern der Ladungspumpe mit dem programmierbaren Verstärker (PGA), um die Größe des Gefälles einer durch den Kristalloszillator (OSC) erzeugten Zickzack-Welle zu regeln, wenn die resonante Gleichrichtungsschaltung in einem vom ersten Verstärker (A) erkannten Leichtlast- oder Ruhemodus ist.

2. Gerät nach Anspruch 1, **dadurch gekennzeichnet, dass** das primäre Eingangsmodul (11) ferner einen zweiten Induktor ($L_r$) umfasst,

   wobei das eine Ende des ersten Induktors ($L_m$) zwischen dem ersten FET (S1) und dem zweiten FET (S2) über den ersten Kondensator ($C_r$) und den zweiten Induktor ($L_r$) geschaltet ist, die in Serie geschaltet sind.

3. Resonante Gleichrichterschaltung nach Anspruch 1 oder 2, **dadurch gekennzeichnet, dass** die Steuervorrichtung konfiguriert ist zum:

   Steuern, in einem ersten Zeitsegment einer Betriebsperiode, des ersten FET (S1) und des zweiten FET (S2), so dass sie einschalten, und Steuern des dritten FET (S3), so dass er ausschaltet, so dass das primäre Eingangsmodul (11) Strom von einer Stromquelle empfängt; Steuern des dritten FET (S3), so dass er einschaltet, so dass der im primären Eingangsmodul (11) gespeicherte Strom über den Transformator (T1) zum sekundären Ausgangsmodul (12) übertragen wird; und Steuern des dritten FET (S3), so dass er vor dem ersten FET (S1) ausschaltet, so dass das primäre Eingangsmodul (11) die Übertragung von Strom zum sekundären Ausgangsmodul (12) stoppt und das sekundäre Ausgangsmodul (12) den Strom speichert;

   Steuern, in einem zweiten Zeitsegment der Betriebsperiode, des ersten FET (S1), des zweiten FET (S2), des dritten FET (S3) und des vierten FET (S4), so dass sie ausschalten, so dass der zweite Sperrschichtkondensator ($C_{oss2}$) des zweiten FET (S2) entlädt, der zweite FET (S2) in einem Nullspannungsübergangszustand in der nachfolgenden Einschaltperiode ist und der erste Sperrschichtkondensator ($C_{oss1}$) des ersten FET (S1) geladen wird, bis die Spannung über zwei Enden des ersten Sperrschichtkondensators ($C_{oss1}$) eine Stromquellenspannung erreicht;

   Steuern, in einem dritten Zeitsegment der Betriebsperiode, des ersten FET (S1), des zweiten FET (S2), des dritten FET (S3) und des vierten FET (S4), so dass sie ausschalten, so dass das primäre Eingangsmodul (11) die Übertragung von Strom zum sekundären Ausgangsmodul (12) stoppt und das sekundäre Ausgangsmodul (12) Strom ausgibt;

Steuern, in einem vierten Zeitsegment der Betriebsperiode, des zweiten FET (S2) und des vierten FET (S4), so dass sie sukzessiv einschalten, so dass das primäre Eingangsmodul (11) Strom zum sekundären Ausgangsmodul (S2) überträgt und das sekundäre Ausgangsmodul (S2) Strom speichert; und

Steuern, in einem fünften Zeitsegment der Betriebsperiode, des ersten FET (S1), des zweiten FET (S2), des dritten FET (S3) und des vierten FET (S4), so dass sie ausschalten, so dass der erste Sperrschichtkondensator ($C_{oss1}$) des ersten FET (S1) entlädt, der erste FET (S1) in einem Nullspannungsübergangszustand in der nachfolgenden Einschaltperiode ist, das primäre Eingangsmodul (11) Strom zum sekundären Ausgangsmodul (12) überträgt und das sekundäre Ausgangsmodul (12) Strom ausgibt.

4. Resonante Gleichrichtungsschaltung nach Anspruch 3, **dadurch gekennzeichnet, dass** die Steuervorrichtung konfiguriert ist zum:
Erfassen einer Einschaltzeit des ersten FET (S1) und des zweiten FET (S2) mit der folgenden Gleichung:

$$T = 2\pi\sqrt{L_r C_r} \,,$$

wobei T die Einschaltzeit des ersten FET (S1) und des zweiten FET (S2) bedeutet, $L_r$ einen Induktanzwert des zweiten Induktors ($L_r$) im primären Eingangsmodul (11) bedeutet und $C_r$ einen Kapazitätswert des ersten Kondensators ($C_r$) im primären Eingangsmodul (11) bedeutet.

5. Resonante Gleichrichtungsschaltung nach Anspruch 4, **dadurch gekennzeichnet, dass** die Einschaltzeit des ersten FET (S1) und zweiten FET (S2) größer ist als eine Einschaltzeit des dritten FET (S3) und vierten FET (S4).

6. Resonante Gleichrichtungsschaltung nach Anspruch 3, **dadurch gekennzeichnet, dass**:
eine Pulsbreite eines den dritten FET (S3) und den vierten FET (S4) steuernden sekundären Ansteuerungssignals um eine voreingestellte Verzögerungszeit mit Bezug auf eine Pulsbreite eines den ersten FET (S1) und den zweiten FET (S2) steuernden primären Ansteuerungssignals verzögert wird, wobei die voreingestellte Verzögerungszeit eine voreingestellte Einschaltverzögerungszeit und eine voreingestellte Ausschaltverzögerungszeit umfasst, wobei die voreingestellte Einschaltverzögerungszeit den dritten FET (S3) und den vierten FET (S4) zum Durchführen eines verzögerten Einschaltens steuert und die voreingestellte Ausschaltverzögerungszeit den dritten FET (S3) und den vierten FET (S4) zum Durchführen eines verzögerten Ausschaltens steuert.

7. Resonante Gleichrichtungsschaltung nach Anspruch 1 oder 2, **dadurch gekennzeichnet, dass** die Steuervorrichtung Folgendes umfasst:
ein erstes Steuermodul (101), konfiguriert zum Durchführen der folgenden Schritte:

Steuern, in einem ersten Zeitsegment einer Betriebsperiode, des ersten FET (S1) und des zweiten FET (S2), so dass sie einschalten, und Steuern des dritten FET (S3), so dass er ausschaltet, so dass das primäre Eingangsmodul (11) Strom von einer Stromquelle erhält; Steuern des dritten FET (S3), so dass er einschaltet, so dass der im primären Eingangsmodul (11) gespeicherte Strom über den Transformator (T1) zum sekundären Ausgangsmodul (12) übertragen wird; und Steuern des dritten FET (S3), so dass er vor dem ersten FET (S1) ausschaltet, so dass das primäre Eingangsmodul (11) das Übertragen von Strom zum sekundären Ausgangsmodul (12) stoppt und das sekundäre Ausgangsmodul (12) Strom speichert;

Steuern, in einem zweiten Zeitsegment der Betriebsperiode, des ersten (FET) (S1), des zweiten FET (S2), des dritten FET (S3) und des vierten FET (S4), so dass sie ausschalten, so dass der zweite Sperrschichtkondensator ($C_{oss2}$) des zweiten FET (S2) entlädt, der zweite FET (S2) in einem Nullspannungsübergangszustand in einer nachfolgenden Einschaltperiode ist und der erste Sperrschichtkondensator ($C_{oss1}$) des ersten FET (S1) geladen wird, bis die Spannung über zwei Enden des ersten Sperrschichtkondensators ($C_{oss1}$) eine Stromquellenspannung erreicht;

Steuern, in einem dritten Zeitsegment der Betriebsperiode, des ersten (FET) (S1), des zweiten FET (S2), des dritten FET (S3) und des vierten FET (S4), so dass sie ausschalten, so dass das primäre Eingangsmodul (11) das Übertragen von Strom zum sekundären Ausgangsmodul (12) stoppt und das sekundäre Ausgangsmodul (12) Strom ausgibt;

Steuern, in einem vierten Zeitsegment der Betriebsperiode, des zweiten (FET) (S2) und des vierten FET (S4), so dass sie sukzessiv einschalten, so dass das primäre Eingangsmodul (11) Strom zum sekundären Ausgangsmodul (12) überträgt und das sekundäre Ausgangsmodul (12) Strom speichert; und

Steuern, in einem fünften Zeitsegment der Betriebsperiode, des ersten (FET) (S1), des zweiten FET (S2), des dritten FET (S3) und des vierten FET (S4), so dass sie ausschalten, so dass der erste Sperrschichtkondensator ($C_{oss1}$) des ersten FET (S1) entlädt, der erste FET (S1) in einem Nullspannungsübergangszustand in einer nachfolgenden Einschaltperiode ist, das primäre Eingangsmodul (11) Strom zum sekundären Ausgangsmodul (12) überträgt und das sekundäre Ausgangsmodul (12) Strom ausgibt.

8. Vorrichtung nach Anspruch 7, **dadurch gekennzeichnet, dass** sie ferner Folgendes umfasst:
ein Erfassungsmodul (102), konfiguriert zum Erfassen einer Einschaltzeit des ersten FET (S1) und des zweiten FET (S2), mit der folgenden Gleichung:

$$T = 2\pi\sqrt{L_r C_r} \; ,$$

wobei T die Einschaltzeit des ersten FET (S1) und des zweiten FET (S2) bedeutet, $L_r$ einen Induktanzwert des zweiten Induktors ($L_r$) im primären Eingangsmodul (11) bedeutet und $C_r$ einen Kapazitätswert des ersten Kondensators ($C_r$) im primären Eingangsmodul (11) bedeutet.

9. Vorrichtung nach Anspruch 7, dadurch gekennzeichnt, dass sie ferner Folgendes umfasst:
ein zweites Steuermodul (103), konfiguriert zum Durchführen einer Steuerung, so dass eine Pulsbreite eines den dritten FET (S3) und den vierten FET (S4) steuernden sekundären Ansteuerungssignals um eine voreingestellte Verzögerungszeit mit Bezug auf eine Pulsbreite eines den ersten FET (S1) und den zweiten FET (S2) steuernden primären Ansteuerungssignals verzögert wird, wobei die voreingestellte Verzögerungszeit eine voreingestellte Einschaltverzögerungszeit und eine voreingestellte Ausschaltverzögerungszeit umfasst, wobei die voreingestellte Einschaltverzögerungszeit den dritten FET (S3) und den vierten FET (S4) zum Durchführen eines verzögerten Einschaltens steuert und die voreingestellte Ausschaltverzögerungszeit den dritten FET (S3) und den vierten FET (S4) zum Durchführen eines verzögerten Ausschaltens steuert.

**Revendications**

1. Dispositif redresseur résonant comprenant un module d'entrée primaire (11), un module de sortie secondaire (12) et un transformateur (T1), dans lequel le module d'entrée primaire (11) réalise un transfert de courant par l'intermédiaire du transformateur (T1) vers le module de sortie secondaire (12),

le module d'entrée primaire (11) comprend : un premier transistor à effet de champ (FET) (S1) et un deuxième FET (S2) connectés en série entre une source de tension ($V_{in}$) et une masse ; un premier condensateur de jonction ($C_{oss1}$) connecté entre une source et un drain du premier FET (S1) ; un second condensateur de jonction ($C_{oss2}$) connecté entre une source et un drain du deuxième FET (S2) ; et un premier inducteur ($L_m$) connecté au niveau des deux extrémités d'une bobine primaire du transformateur (T1), une extrémité du premier inducteur ($L_m$) étant connectée entre le premier FET (S1) et le deuxième FET (S2) par l'intermédiaire d'un premier condensateur ($C_r$), et l'autre extrémité du premier inducteur ($L_m$) étant connectée à la masse, et

le module de sortie secondaire (12) comprend : un troisième FET (S3) ayant une source connectée à une extrémité d'une bobine secondaire du transformateur (T1) ; et un quatrième FET (S4) ayant une source connectée à l'autre extrémité de la bobine secondaire du transformateur (T1), dans lequel un drain du troisième FET (S3) est connecté à un drain du quatrième FET (S4), et est connecté à une borne de sortie du module de sortie secondaire (12) par l'intermédiaire d'un second condensateur ($C_o$) et d'une première résistance ($R_L$) qui sont connectés en parallèle ;

**caractérisé par** un appareil de commande qui comprend : un premier amplificateur (A) connecté au niveau d'une entrée non inverseuse à une tension de sortie de référence (VFB) et au niveau de la sortie (FEAO) à un sélecteur de mode, un second amplificateur (C) connecté au niveau d'une entrée inverseuse à la sortie du sélecteur de mode et au niveau de la sortie à un contrôleur, un amplificateur à gain programmable (PGA) connecté au contrôleur, une pompe de charge connectée à l'amplificateur à gain programmable (PGA), et un oscillateur à quartz (OSC) connecté à la pompe de charge et au contrôleur, l'appareil de commande étant configuré pour fournir des signaux de commutation à chacun des transistors à effet de champ dans le module d'entrée primaire et le module de sortie secondaire, configuré en outre pour fonctionner dans un mode de commande à modulation de largeur d'impulsion (PWM) en comparant le signal de sortie du second amplificateur (C) à un onde en zigzag dans le contrôleur, quand le circuit redresseur résonant est dans un mode de charge complète détecté par le premier amplificateur (A) et pour fonctionner dans un mode de commande à modulation de fréquence (FM) en commandant la pompe de charge avec l'amplificateur à gain programmable pour commander la grandeur de la pente d'une onde en zigzag générée par l'oscillateur à quartz (OSC) quand le circuit redresseur résonant est dans un mode de charge légère ou d'inactivité détecté par le premier amplificateur (A).

**2.** Dispositif selon la revendication 1, **caractérisé en ce que** : le module d'entrée primaire comprend en outre un second inducteur ($L_r$),

dans lequel la une extrémité du premier inducteur ($L_m$) est connectée entre le premier FET (S1) et le deuxième FET (S2) par l'intermédiaire du premier condensateur ($C_r$) et du second inducteur ($L_r$) qui sont connectés en série.

**3.** Circuit redresseur résonant selon la revendication 1 ou 2, **caractérisé en ce que** l'appareil de commande est configuré pour :

durant un premier segment temporel d'une période de fonctionnement, commander le premier FET (S1) et le deuxième FET (S2) pour les rendre passants et commander le troisième FET (S3) pour le rendre bloquant, de telle sorte que le module d'entrée primaire (11) reçoive un courant depuis une source de courant ; commander le troisième FET (S3) pour le rendre passant, de telle sorte que le courant stocké dans le module d'entrée primaire (11) soit transféré au module de sortie secondaire (12) par l'intermédiaire du transformateur (T1) ; et commander le troisième FET (S3) pour le rendre bloquant avant le premier FET (S1), de telle sorte que le module d'entrée primaire (11) arrête le transfert de courant vers le module de sortie secondaire (12), et le module de sortie secondaire (12) stocke le courant ;

durant un deuxième segment temporel de la période de fonctionnement, commander le premier FET (S1), le deuxième FET (S2), le troisième FET (S3) et le quatrième FET (S4) pour les rendre bloquants, de telle sorte que le second condensateur de jonction ($C_{oss2}$) du deuxième FET (S2) se décharge, le deuxième FET (S2) soit dans un état de transition de tension nulle dans une période de mise à l'état passant suivante, et le premier condensateur de jonction ($C_{oss1}$) du premier FET (S1) soit chargé jusqu'à ce que la tension aux bornes du premier condensateur de jonction ($C_{oss1}$) atteigne une tension de source de courant ;

durant un troisième segment temporel de la période de fonctionnement, commander le premier FET (S1), le deuxième FET (S2), le troisième FET (S3) et le quatrième FET (S4) pour les rendre bloquants, de telle sorte que le module d'entrée primaire (11) arrête le transfert de courant vers le module de sortie secondaire (12), et le module de sortie secondaire (12) produise du courant ;

durant un quatrième segment temporel de la période de fonctionnement, commander le deuxième FET (S2) et le quatrième FET (S4) pour les rendre passants successivement, de telle sorte que le module d'entrée primaire (11) réalise un transfert de courant vers le module de sortie secondaire (S2), et le module de sortie secondaire (S2) stocke la puissance ; et

durant un cinquième segment temporel de la période de fonctionnement, commander le premier FET (S1), le deuxième FET (S2), le troisième FET (S3) et le quatrième FET (S4) pour les rendre bloquants, de telle sorte que le premier condensateur de jonction ($C_{oss1}$) du premier FET (S1) se décharge, le premier FET (S1) soit dans un état de transition de tension nulle dans une période de mise à l'état passant suivante, le module d'entrée primaire (11) réalise un transfert de courant vers le module de sortie secondaire (12), et le module de sortie secondaire produise du courant.

**4.** Circuit redresseur résonant selon la revendication 3, **caractérisé en ce que** l'appareil de commande est configuré pour :

acquérir un temps de passage à l'état passant du premier FET (S1) et le deuxième FET (S2) avec l'équation suivante :

$$T = 2\pi\sqrt{L_r C_r}$$

dans lequel T désigne le temps de passage à l'état passant du premier FET (S1) et du deuxième FET (S2), $L_r$ désigne une valeur d'inductance du second inducteur ($L_r$) dans le module d'entrée primaire (11), et $C_r$ désigne une valeur de capacité du premier condensateur ($C_r$) dans le module d'entrée primaire (11).

**5.** Circuit redresseur résonant selon la revendication 4, **caractérisé en ce que** le temps de passage à l'état passant du premier FET (S1) et du deuxième FET (S2) est supérieur à un temps de passage à l'état passant du troisième FET (S3) et du quatrième FET (S4).

**6.** Circuit redresseur résonant selon la revendication 3, **caractérisé en ce que** :

une largeur d'impulsion d'un signal d'excitation secondaire qui commande le troisième FET (S3) et le quatrième FET (S4) est retardée par un temps de retard prédéfini par rapport à une largeur d'impulsion d'un signal d'excitation primaire qui commande le premier FET (S1) et le deuxième FET (S2), le temps de retard prédéfini comprenant un temps de retard prédéfini du passage à l'état passant et un temps de retard prédéfini du passage à l'état bloquant, dans lequel le temps de retard prédéfini du passage à l'état passant commande le troisième FET (S3) et le quatrième FET (S4) pour réaliser un passage à l'état passant retardé, et le temps de retard prédéfini de passage à l'état bloquant commande le troisième FET (S3) et le quatrième FET (S4) pour réaliser un passage à l'état bloquant retardé.

7. Circuit redresseur résonant selon la revendication 1 ou 2, **caractérisé en ce que** l'appareil de commande comprend :

un premier module de commande (101) configuré pour réaliser les étapes suivantes,
durant un premier segment temporel d'une période de fonctionnement, la commande du premier FET (S1) et du deuxième FET (S2) pour les rendre passants et la commande du troisième FET (S3) pour le rendre bloquant, de telle sorte que le module d'entrée primaire (11) reçoive un courant depuis une source de courant ;
la commande du troisième FET (S3) pour le rendre passant, de telle sorte que le courant stocké dans le module d'entrée primaire (11) soit transféré au module de sortie secondaire (12) par l'intermédiaire du transformateur (T1) ; et la commande du troisième FET (S3) pour le rendre bloquant avant le premier FET (S1), de telle sorte que le module d'entrée primaire (11) arrête le transfert de courant vers le module de sortie secondaire (12), et le module de sortie secondaire (12) stocke le courant ;
durant un deuxième segment temporel de la période de fonctionnement, la commande du le premier FET (S1), du deuxième FET (S2), du troisième FET (S3) et du quatrième FET (S4) pour les rendre bloquants, de telle sorte que le second condensateur de jonction (C_{oss2}) du deuxième FET (S2) se décharge, le deuxième FET (S2) soit dan uns état de transition de tension nulle dans une période de mise à l'état passant suivante, et le premier condensateur de jonction(C_{oss1}) du premier FET (S1) soit chargé jusqu'à ce que la tension aux bornes du premier condensateur de jonction (C_{oss1}) atteigne une tension de source de courant ;
durant un troisième segment temporel de la période de fonctionnement, la commande du premier FET (S1), du deuxième FET (S2), du troisième FET (S3) et du quatrième FET (S4) pour les rendre bloquants, de telle sorte que le module d'entrée primaire (11) arrête le transfert de courant vers le module de sortie secondaire (12), et le module de sortie secondaire (12) produise du courant ;
durant un quatrième segment temporel de la période de fonctionnement, la commande du le deuxième FET (S2) et du quatrième FET (S4) pour les rendre passants successivement, de telle sorte que le module d'entrée primaire (11) réalise un transfert de courant vers le module de sortie secondaire (12), et le module de sortie secondaire (12) stocke le courant ; et
durant un cinquième segment temporel de la période de fonctionnement, la commande du le premier FET (S1), du deuxième FET (S2), du troisième FET (S3) et du quatrième FET (S4) pour les rendre bloquants, de telle sorte que le premier condensateur de jonction (C_{oss1}) du premier FET se décharge, le premier FET (S1) soit dans un état de transition de tension nulle dans une période de mise à l'état passant suivante, le module d'entrée primaire (11) réalise un transfert de courant vers le module de sortie secondaire (12), et le module de sortie secondaire (12) produise du courant.

8. Appareil selon la revendication 7, **caractérisé en ce qu'**il comprend en outre :
un module d'acquisition (102) configuré pour acquérir un temps de passage à l'état passant du premier FET (S1) et du deuxième FET (S2) avec l'équation suivante :

$$T = 2\pi\sqrt{L_r C_r}$$

dans lequel T désigne le temps de passage à l'état passant du premier FET (S1) et du deuxième FET (S2), $L_r$ désigne une valeur d'inductance du second inducteur ($L_r$) dans le module d'entrée primaire (11), et $Cr$ désigne une valeur de capacité du premier condensateur ($C_r$) dans le module d'entrée primaire (11).

9. Appareil selon la revendication 7, **caractérisé en ce qu'**il comprend en outre :
un second module de commande (103), configuré pour réaliser une commande de telle sorte qu'une largeur d'impulsion d'un signal d'excitation secondaire qui commande le troisième FET (S3) et le quatrième FET (S4) soit retardée par un temps de retard prédéfini par rapport à une largeur d'impulsion d'un signal d'excitation primaire qui commande le premier FET (S1) et le deuxième FET (S2), le temps de retard prédéfini comprenant un temps de retard prédéfini du passage à l'état passant et un temps de retard prédéfini du passage à l'état bloquant, dans lequel le temps de retard prédéfini du passage à l'état passant commande le troisième FET (S3) et le quatrième FET (S4) pour réaliser un passage à l'état passant retardé, et le temps de retard prédéfini de passage à l'état bloquant commande le troisième FET (S3) et le quatrième FET (S4) pour réaliser un passage à l'état bloquant retardé.

Fig.1

Fig.2

Fig. 3

Fig.4

Fig.5

Fig.6

Fig.7

Fig.8

Fig. 9

Fig. 10

Fig. 11